# EUROPÄISCHE PATENTSCHRIFT

(11) **EP 0 344 618 B1**
(45) Veröffentlichungstag und Bekanntmachung des Hinweises auf die Patenterteilung: **13.12.1995**
(21) Anmeldenummer: 89109467.4
(22) Anmeldetag: 26.05.1989
(51) Int. Cl.: G01N 1/22

(54) **Vorrichtung zur Entnahme einer Gasprobe**
Gas-sampling device
Dispositif de prélèvement d'échantillon de gaz

(30) Priorität: 30.05.1988 DE 3818372
(43) Veröffentlichungstag der Anmeldung: 06.12.1989
(73) Patentinhaber: Bernath, Tibor, D-30974 Wennigsen (DE)
(72) Erfinder: Bernath, Tibor, D-30974 Wennigsen (DE); Robotta, Werner, D-30926 Seelze (DE)
(74) Vertreter: von Hellfeld, Axel, Dr. Dipl.-Phys.,

(56) Entgegenhaltungen:
- DE-C- 270 351
- GB-A- 1 233 325
- US-A- 3 680 388
- US-A- 4 008 620
- SOVIET INVENTIONS ILLUSTRATED, Woche E28, 25. August 1982, Nr. 59235E/28, Derwent Publications Ltd, London, GB; & SU-A-866 443

## Beschreibung

Die Erfindung betrifft eine Vorrichtung zur Entnahme einer Gasprobe aus einem Entnahmeraum mit den Merkmalen des Oberbegriffes des Patentanspruches 1. Eine solche Vorrichtung ist aus der US-A-4 008 620 bekannt.

Im Rahmen des Umweltschutzes muß die Abgabe von insbesondere Industrie-Abgasen in die Atmosphäre überwacht werden. Auch bei industriellen Fertigungsprozessen ist es häufig erforderlich, die Konzentration bestimmter Gase zu messen. Die Erfindung betrifft insbesondere die Entnahme von Gasproben aus einem Entnahmeraum und deren Zufuhr zu einem Meßgerät. Beim Entnahmeraum kann es sich um beispielsweise einen industriellen Fertigungsraum oder auch einen Schornstein handeln. Das Meßgerät ist nicht direkt im Entnahmeraum angeordnet, sondern über eine Zuleitung mit diesem verbunden. Über die Zuleitung wird die Gasprobe aus dem Entnahmeraum zum Meßgerät geführt. Zu diesem Zweck ist beim Stand der Technik meßgeräteseitig (entweder vor oder hinter dem Meßgerät) eine Pumpe an die Zuleitung angeschlossen, die in der Zuleitung einen Unterdruck erzeugt, der die Gasprobe vom Entnahmeraum zum Meßgerät führt.

Da es sich bei den zu untersuchenden Gasproben zum Teil um aggressive Gase handelt, wird das Meßgerät im Betrieb stark strapaziert. Folgende Parameter sind insbesondere für die Lebensdauer des Meßgerätes bedeutsam:
- die Konzentration der Partikelteilchen am Meßgerät
- der Anteil an aggressiven Komponenten, die das Meßgerät angreifen (z.B. durch Korrosion etc.), und
- der Kondensationspunkt an den Oberflächen des Meßgases (die flüssige Phase, also das Kondensat, ist wesentlich störender als die Gasphase).

Aus den vorstehenden Bedingungen ergibt sich, daß bei sehr aggressiven Abgasen eine Verdünnung des Meßgases am Meßgerät vorteilhaft ist. Um aber bei einer Gasprobe, die gegenüber der Konzentration im Entnahmeraum um ein Vielfaches verdünnt ist, reproduzierbare Meßergebnisse zu erhalten, muß die Verdünnung auch bei sich ändernden Umgebungsbedingungen, wie Temperatur und Druck, konstant gehalten werden.

Diese Umstände führten bei bekannten gattungsgemäßen Vorrichtungen z. B. US-A-4 008 620 mit einer Meßgaspumpe zur Förderung der Gasprobe zum Meßgerät zu Schwierigkeiten. Zum einen weisen auch die Meßgaspumpen bewegte Teile auf, die durch die aggressiven Gase angegriffen werden können. Zum anderen verlangen Anordnungen mit Meßgaspumpen auch exakt reproduzierbare Pumpleistungen, um die Verdünnungsverhältnisse ebenfalls genau zu reproduzieren. Überdies führen Anordnungen mit einer Meßgaspumpe, welche in der Zuleitung ein Vakuum erzeugt, bei einem Leck in der Zuleitung ebenfalls zu nicht genau reproduzierten Verdünnungen, da über die Lecks Luft mit in das Meßgas eingesaugt wird.

Der Erfindung liegt die Aufgabe zugrunde, eine gattungsgemäße Vorrichtung zur Entnahme einer Gasprobe aus einem Entnahmeraum zu schaffen, die bei einer langen Lebensdauer des Meßgerätes exakt reproduzierbare Meßergebnisse liefert.

Die erfindungsgemäße Lösung dieser Aufgabe ist im Patentanspruch 1 beschrieben.

Eine bevorzugte Ausgestaltung dieser Aufgabe ist dem Patentanspruch 2 zu entnehmen.

Die Förderung der Gasprobe vom Entnahmeraum zum Meßgerät mittels einer Überdruck erzeugenden Luftströmung hat den Vorteil, daß das Treibgas selbst zur Verdünnung der Gasprobe verwendet werden kann. Auch erfordert der Transport der Gasprobe mittels des Treibgases keine bewegten Bauteile, die selbst von der Gasprobe angegriffen werden können.

Es ist also vorgesehen, daß Treibgas unter Druck aus einer Primär-Düse in den Eingang einer Sekundär-Düse strömt, wobei der Überschall-Düsenstrahl der Primär-Düse das zu untersuchende Gas aus dem Entnahmeraum mit in die Sekundär-Düse führt, welche in die Zuleitung zum Meßgerät mündet. Seitlich der Expansionsströmung einer Überschall-Düse entsteht ein "Sog", welcher Gas aus der Umgebung (hier die zu untersuchende Gasprobe) ansaugt.

Durch Steuerung des Treibgas-Druckes vor der Primär-Düse kann das Verdünnungsverhältnis der Gasprobe in einem weiten Bereich eingestellt werden. Es wird also die Gasprobe durch das Treibgas selbst verdünnt. Auch hängt das Verdünnungsverhältnis vom Druck im Entnahmeraum, vom Druck nach der Expansion in der Sekundär-Düse und von der Temperaturdifferenz zwischen dem Treibgas und dem zu untersuchenden Gas ab.

Es hat sich als vorteilhalt erwiesen, mittels eines Wärmetauschers die Temperatur des Treibgases an die Temperatur der Gasprobe anzugleichen.

Es hat sich hinsichtlich der Aufgabe, genaue Meßergebnisse zu erzielen, als vorteilhaft erwiesen, daß der Druck nach der Expansion mittels eines Präzisionsdifferenzdruckreglers konstant gehalten wird. Als Bezugsdruck für den Regler wird vorzugsweise der Sekundärdruck gewählt. In diesem Fall kann auf die Messung des Druckes nach der Expansion verzichtet werden und der Rechner führt die Regelung vollautomatisch durch. Diese Variante ist besonders bei Verwendung von Meßgeräten vorzuziehen, die einen konstanten Arbeitsdruck gegenüber dem atmosphärischen Druck benötigen.

Der Anschluß des Meßgerätes an die der Sekundär-Düse nachgeschaltete Zuleitung erfolgt vorzugsweise über eine Drossel, da in der Regel am Eingang des Meßgerätes Atmosphärendruck herrschen soll.

Um zu vermeiden, daß die Sekundär-Düse mit groben Partikelteilchen aus dem Entnahmeraum verstopft wird, ist am Eingang der Sekundär-Düse vorzugsweise ein Tiefenfilter vorgesehen, so daß nur Meßgas in die Sekundär-Düse eintritt, welches das Tiefenfilter passiert hat.

Die Anordnung aus einer Primär- und einer Sekundär-Düse ermöglicht auch ein bequemes Kalibrieren des Meßgerätes mittels eines Kalibriergases, welches am Eingang der Sekundär-Düse in den Gasstrom eingeführt wird.

Nachfolgend ist die Erfindung anhand eines in der Zeichnung dargestellten Ausführungsbeispieles näher erläutert. Es zeigt:
- Fig. 1: schematisch eine Vorrichtung zur Entnahme einer Gasprobe aus einem Entnahmeraum;
- Fig. 2: eine bevorzugte Ausgestaltung der Primär- und Sekundär-Düsen und
- Fig. 3: ein Ausführungsbeispiel einer Vorrichtung zur Entnahme einer Gasprobe aus einem Entnahmeraum im Detail

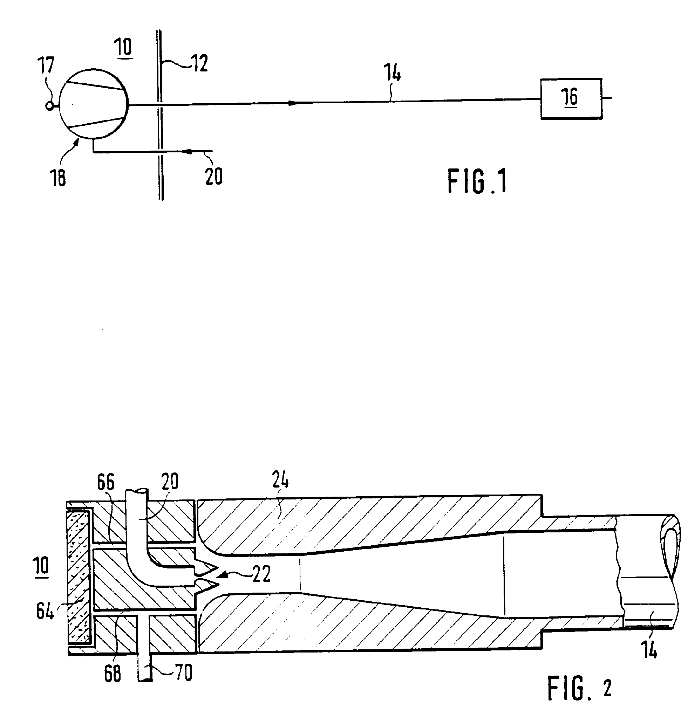

Gemäß Fig. 1 fallen im Entnahmeraum 10 die zu untersuchenden Gase an. Beim Entnahmeraum 10 kann es sich z.B. um einen Abzug aus einer industriellen Fertigungsanlage oder auch um einen Fertigungsraum selbst handeln. Die den Entnahmeraum abgrenzende Wand ist mit dem Bezugszeichen 12 angedeutet. Eine Zuleitung 14 führt aus dem Entnahmeraum 10 die zu untersuchende Gasprobe zum Meßgerät 16.

An der Entnahmestelle 17 tritt das zu untersuchende Gas aus dem Entnahmeraum 10 in eine Druck-Erzeugungseinrichtung 18 ein, in welche auch eine Treibgas-Zuleitung 20 mündet. In der weiter unten näher beschriebenen Druck-Erzeugungseinrichtung 18 wird die zu untersuchende Gasprobe mit dem Treibgas gemischt und unter Überdruck in die Zuleitung 14 zum Meßgerät 16 gegeben. Durch das Treibgas 20 wird die zu untersuchende Gasprobe beispielsweise im Verhältnis 1:100 verdünnt.

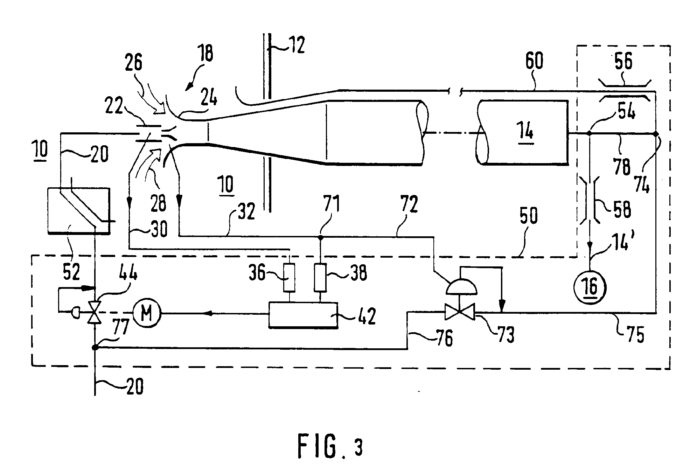

Fig. 2 und 3 zeigen die Druck-Erzeugungseinrichtung 18 gemäß Fig. 1 im Detail. Die Treibgas-Zuleitung 20 mündet in eine Überschall-Primär-Düse 22, welche ihrerseits in eine größere Sekundär-Düse 24 mündet. Der Expansionsstrahl der Primär-Düse 22 wird also direkt in den Eingang der Sekundär-Düse 24 injiziert. Wie in Fig. 2 dargestellt, ist der Eingang der Sekundär-Düse wesentlich größer als der Ausgang der Primär-Düse, so daß seitwärts Öffnungen verbleiben, durch die gemäß den Pfeilen 26, 28 (Fig. 3) die Gasprobe aus dem Entnahmeraum 10 in die Sekundär-Düse 24 mitgeführt wird. Bekanntlich entsteht seitwärts des Expansionsstrahles der Primär-Düse 22 ein Sog.

Der Druck des Treibgases vor der Primär-Düse 22 und der Druck im Entnahmeraum 10 unmittelbar neben dem Expansionsstrahl der Primär-Düse werden gemessen und mittels der Druckleitungen 30, 32 zu Druckaufnehmern 36, 38 übertragen. Die Meßergebnisse werden in einen Rechner 42 eingegeben, welcher über einen Stellmotor M ein Ventil 44 beaufschlagt, mit dem der Druck des über die Zuleitung 20 zugeführten Treibgases vor der Primär-Düse 22 einstellbar ist.

Die rechnenden und steuernden Bauteile lassen sich entfernt vom Entnahmeraum und den übrigen Meß-Bauelementen in einem Gehäuse 50 anordnen, welches für die Bedienungsperson bequem zugänglich ist.

Mittels eines Wärmetauschers 52 wird das Treibgas an die Temperatur der Gasprobe angeglichen.

Wie weiterhin in Fig. 3 schematisch dargestellt ist, ist am Ende der Zuleitung 14 zum Meßgerät 16 eine Verzweigung 54 vorgesehen. Ein Zweig führt zur Drossel 56 und zu einer nicht weiter für die Messung verwendeten Nebenleitung 60, während der andere Zweig zu einer Drossel 58 führt, die über die Zuleitung 14′ unmittelbar zum Meßgerät 16 führt, welches in Fig. 3 mit dem zugehörigen Bezugszeichen angedeutet ist. Durch die Drossel 58 herrscht am Eingang des Meßgerätes 16 abhängig vom pneumatischen Widerstand des nachgeschalteten Meßgerätes nahezu atmosphärischer Druck.

Fig. 2 zeigt eine Anordnung aus Primär- und Sekundär-Düse im Detail. Die Primär-Düse 22 erzeugt einen Überschall-Strahl aus dem Treibgas, welches über die Zuleitung 20 zugeführt wird. Wie dargestellt, mündet der Überschall-Strahl direkt in die größere Sekundär-Düse 24. Beide Düsen sind als sogenannte Laval-Düsen ausgebildet. Gemäß der Bernoulli-Gleichung entsteht seitwärts des Überschall-Düsenstrahles der Primär-Düse 22 ein statischer Unterdruck, welcher bewirkt, daß über Zuführungen 66, 68 zu untersuchendes Gas in die Sekundär-Düse 24 eintritt. Den Zuführungen 66, 68 ist ein Tiefenfilter vorgeschaltet, so daß nur gereinigtes Gas in die Sekundär-Düse 24 gelangt.

Über eine Kalibriergas-Zuleitung 70 kann ein geeignetes Gas zum Kalibrieren des Meßgerätes 16 zugeführt werden. Die zugeführte Menge an Kalibriergas liegt geringfügig über der Kapazität der Sekundär- Düse, so daß bei der Kalibrierung das Kalibriergas nicht mit zu untersuchenden Gas aus dem Entnahmeraum 10 verdünnt wird.

Gemäß Fig. 3 wird mit Hilfe eines Differenzdruckreglers 73 ein Steuerluftsystem erzeugt. Hierzu wird in einer Verzweigung 74 dem verdünnten Probengasstrom in einer Druckleitung 78 soviel Steuerluft über eine Druckleitung 75 zugeführt, daß der durch den Differenzdruckregler eingestellte Druck aufgebaut wird. Der um den für das Meßgerät 16 erforderlichen Gasstrom verminderte, verdünnte Probengasstrom und der Steuerluftstrom passieren vereinigt die Drossel 56. Der Referenzdruck für den Differenzdruckregler 73 wird diesem über eine Druckleitung 72 zugeführt. Die Druckleitung 72 zweigt bei 71 von der Druckleitung 32 ab. Die benötigte Steuerluft wird der Treibgasleitung an der Verzweigung 77 über eine Leitung 76 dem Differenzdruckregler 73 zugeführt.

## Patentansprüche

1. Vorrichtung zur Entnahme einer Gasprobe aus einem Entnahmeraum (10), insbesondere für die Messung und/oder Überwachung von Industrieabgasen, enthaltend eine Zuleitung (14) vom Entnahmeraum zu einem Meßgerät (16) sowie eine Primär- und eine Sekundärdüse (22, 24), wobei die Gasprobe mittels der Primär- und der Sekundärdüse (22, 24) gefördert und mit Treibgas verdünnt wird und wobei in der Zuleitung ein Druckgefälle zum Meßgerät und zumindest teilweise ein Überdruck gegenüber dem Atmosphärendruck besteht,
dadurch **gekennzeichnet**, daß der Druck am Ausgang der Sekundärdüse (24) und damit auch der Druck am Eingang des Meßgeräts (16) mittels eines Differenzdruckreglers (73) konstant gehalten ist.

2. Vorrichtung nach Anspruch 1,
dadurch **gekennzeichnet**, daß als Bezugsdruck für den Differenzdruckregler (73) der Druck neben dem Expansionsstrahl der Primärdüse (22) verwendet wird.

## Claims

1. A device for taking a gas sample from an extraction space (10), particularly for measuring and/or supervising industrial waste gases, including a supply pipe (14) running from the extraction space to a measuring device (16), as well as a primary and a secondary nozzle (22, 24), the gas sample being conveyed through said primary and said secondary nozzle (22, 24) and being diluted with propellant, and a drop of pressure existing with regard to said measuring device in said supply pipe and an overpressure existing at least partially with regard to the atmospheric pressure in said supply pipe,
**characterized in that** the pressure at the outlet of the secondary nozzle (24) and thus also the pressure at the inlet of the measuring device (16) is kept constant by means of a differential pressure control means (73).

2. A device as set forth in claim 1,
**characterized in that** the pressure besides the expansion beam of the primary nozzle (22) is used as reference pressure for the differential pressure control means (73).

## Revendications

1. Dispositif de prélèvement d'un échantillon de gaz d'un volume de prélèvement (10), en particulier pour la mesure et / ou la surveillance de gaz d'échappement industriels, comprenant une conduite d'amenée (14) du volume de prélèvement à un appareil de mesure (16) ainsi qu'une tuyère primaire et une tuyère secondaire (22, 24), dans lequel l'échantillon de gaz est convoyé par la tuyère primaire et la tuyère secondaire (22, 24) et est dilué à l'aide d'un gaz propulseur et il se produit dans la conduite d'amenée une chute de pression vers l'appareil de mesure et il règne au moins partiellement une surpression par rapport à la pression atmosphérique,
caractérisé en ce que la pression autour de la sortie de la tuyère secondaire (24) et ainsi aussi à l'entrée de l'appareil de mesure est maintenue constante au moyen d'un régulateur de pression différentielle (73).

2. Dispositif selon la revendication 1, caractérisé en ce que la pression à côté du jet de détente de la tuyère primaire (22) est utilisée comme pression de référence pour le régulateur de pression différentielle (73).
